(19) **Europäisches Patentamt**
**European Patent Office**
**Office européen des brevets**

(11) Publication number: **0 572 464 B1**

## EUROPEAN PATENT SPECIFICATION

(45) Date of publication of patent specification: **20.09.95**

(51) Int. Cl.6: **C04B 35/58**, C04B 35/80

(21) Application number: **92904828.8**

(22) Date of filing: **06.01.92**

(86) International application number:
**PCT/US92/00081**

(87) International publication number:
**WO 92/13812 (20.08.92 92/22)**

(54) **A SELF-REINFORCED SILICON NITRIDE CERAMIC WITH CRYSTALLINE GRAIN BOUNDARY PHASE, AND A METHOD OF PREPARING THE SAME.**

(30) Priority: **19.02.91 US 657716**

(43) Date of publication of application:
**08.12.93 Bulletin 93/49**

(45) Publication of the grant of the patent:
**20.09.95 Bulletin 95/38**

(84) Designated Contracting States:
**DE FR GB IT NL SE**

(56) References cited:
**EP-A- 0 240 177**
**EP-A- 0 250 153**
**EP-A- 0 272 066**
**US-A- 4 883 776**
**US-A- 4 919 689**

**Journal of the American Ceramic Society, vol. 58, pages 323-326, 1975**

(73) Proprietor: **THE DOW CHEMICAL COMPANY**
**2030 Dow Center,**
**Abbott Road**
**Midland,**
**Michigan 48640 (US)**

(72) Inventor: **HWANG, Chinmau, James**
**6213 Siebert Road**
**Midland, MI 48640 (US)**
Inventor: **PYSIK, Aleksander, J.**
**1213 Wakefield Drive**
**Midland, MI 48640 (US)**

(74) Representative: **Burford, Anthony Frederick**
**W.H. Beck, Greener & Co.**
**7 Stone Buildings**
**Lincoln's Inn**
**London WC2A 3SZ (GB)**

**Description**

This invention pertains to a silicon nitride ($Si_3N_4$) ceramic body and a process for preparing the ceramic body.

Silicon nitride ceramics are recognized for their excellent mechanical and physical properties, including good wear resistance, low coefficient of thermal expansion, good thermal shock resistance, high creep resistance and high electrical resistivity. In addition, silicon nitride ceramics are resistant to chemical attack, particularly to oxidation. Because of these attributes, silicon nitride is useful in a variety of wear and high temperature applications, such as cutting tools and parts in pumps and engines.

Failure of silicon nitride ceramics is generally associated with brittleness and flaws. The object therefore is to prepare a silicon nitride ceramic with high fracture toughness ($K_{IC}$) and strength. Fracture strength is directly proportional to the fracture toughness and inversely proportional to the square root of the flaw size. High fracture toughness combined with small flaw size is therefore highly desirable. Monolithic silicon nitride, however, has a relatively low fracture toughness of about 5 MPa $(m)^{\frac{1}{2}}$.

In order to obtain a fully densified silicon nitride ceramic, a densification aid, such as magnesia, is almost always necessary. On sintering, the densification aid typically forms a glassy grain boundary phase that acts as a matrix into which the grains of crystalline silicon nitride are embedded. Disadvantageously, the glassy phase is responsible for a loss of strength and a low creep resistance in the ceramic at high temperatures. The glassy phase is also responsible for a lowering of oxidation resistance at high temperatures.

The high temperature material properties of silicon nitride ceramics reportedly can be improved if the grain boundary phase is crystalline rather than glassy. For example, A. Tsuge, K. Nishida and M. Komatsu disclose, in Journal of American Ceramic Society, 58, (1975) 323-326, a hot-pressed silicon nitride ceramic containing a crystalline grain boundary phase identified as $Si_3N_4 \cdot Y_2O_3$ prepared by pre-sintering and then hot-pressing a powder predominantly of silicon nitride and yttria. The ceramic is disclosed to have improved high temperature strength when compared to a silicon nitride ceramic having a glassy grain boundary phase of yttria. Disadvantageously, the pre-sintered and hot-pressed ceramic does not have sufficient strength and toughness to meet current commercial standards.

US-A-4,920,085 discloses a silicon nitride sintered body comprising $\beta$-$Si_3N_4$ and further comprising a crystalline grain boundary phase in an amount less than 90 weight percent of the total grain boundary phases, the balance being a glassy composition. The crystalline phase contains one or more of the stoichiometric compositions $M_4Si_2O_7N_2$, $M_{10}Si_2O_{23}N_4$ or $MSiO_2N$, wherein M is scandium, terbium, erbium, holmium or dysprosium. Disadvantageously, this sintered body possesses a considerable amount of glassy grain boundary phase which lowers strength and creep resistance.

US-A-4,883,776 discloses a process for preparing a silicon nitride body having a fracture toughness greater than 6 MPa $(m)^{1/2}$ and containing $\beta$-silicon nitride whiskers having an average aspect ratio of at least 2.5. The process comprises hot-pressing a powder mixture to form the body. The mixture comprises silicon nitride, magnesium oxide as a densification aid, yttrium oxide as a conversion aid and calcium oxide as a compound that promotes formation of $\beta$-silicon nitride whiskers.

US-A-4,919,689 discloses the silicon nitride bodies prepared by the process of US-A-4,883,776.

One aspect of this invention is a process for preparing a self-reinforced silicon nitride ceramic body containing a phase of predominately $\beta$-silicon nitride whiskers having a high average aspect ratio, and further containing a crystalline grain boundary phase having an oxynitride apatite structure. For the purposes of the present invention a "high" average aspect ratio means an average aspect ratio of at least 2.5. The process comprises subjecting a powder mixture comprising:

(a) silicon nitride in an amount sufficient to provide a ceramic body;

(b) a densification aid comprising a source of strontium and, optionally, a source of an element selected from barium, calcium, lithium, sodium, or a mixture thereof, said source(s) being present in an amount sufficient to promote densification of the powder;

(c) a conversion aid comprising a source of an element selected from yttrium, lanthanum, cerium, neodymium, samarium, europium, gadolinium, terbium, dysprosium, holmium, erbium, ytterbium, thorium, or a mixture thereof, said source being present in an amount sufficient to promote the conversion of the starting silicon nitride to predominantly $\beta$-silicon nitride;

(d) at least one whisker growth enhancing compound in an amount sufficient to promote the formation of $\beta$-silicon nitride whiskers, said compound being an oxide or a non-oxide derivative of an element selected from calcium, lithium, sodium, scandium, titanium, aluminum, or a mixture thereof, provided, however, that the element differs from that of the optional component of densification aid (b); and

(e) silica in an amount sufficient to provide an oxynitride apatite crystalline grain boundary phase;

to conditions of temperature and pressure sufficient to provide for densification and in situ formation of $\beta$-silicon nitride whiskers having a high average aspect ratio and of a glassy grain boundary phase, and thereafter subjecting the densified composition to annealing for a time sufficient to convert at least 90 volume % of said grain boundary phase to a crystalline grain boundary phase having an oxynitride apatite structure, as determined by X-ray crystallography. The resulting self-reinforced silicon nitride ceramic body has a Palmqvist toughness greater than 37 kg/mm. Any means may be used to apply pressure and temperature so long as sufficient densification and in situ whisker formation occur. Likewise, any means of annealing may be employed so long as a crystalline grain boundary phase is formed.

In a related aspect, the powder mixture further comprises a Palmqvist toughness enhancing amount of at least one preformed reinforcing material.

A second aspect of this invention is a silicon nitride ceramic body obtainable by the process of the invention having a Palmqvist toughness greater than 37 kg/mm and comprising:

(a) a crystalline phase of $\beta$-silicon nitride of which at least 20 volume percent, as measured by viewing one plane of the silicon nitride ceramic body by scanning electron microscopy, is in the form of whiskers having an average aspect ratio of at least 2.5; and

(b) a crystalline grain boundary phase of an oxynitride apatite structure, as determined by X-ray crystallography, in an amount not greater than 35 weight percent of the total weight, said structure represented by the general formula $A_xB_{10-x}[Si(O,N)_4]_6(O,N)_y$ wherein A is strontium, optionally in combination with calcium, barium, lithium, sodium, scandium, titanium, aluminum, or a mixture thereof; B is yttrium, lanthanum, cerium, neodymium, samarium, europium, gadolinium, terbium, dysprosium, holmium, erbium, ytterbium, thorium or a mixture thereof; x is a positive number greater than 0 but less than or equal to 4; and y is a positive number greater than 0 but less than or equal to 2.

In a related aspect, the silicon nitride ceramic body further comprises a Palmqvist toughness enhancing amount of at least one preformed reinforcing material.

A third aspect of this invention is a cutting tool comprising the above-identified silicon nitride ceramic body.

The silicon nitride ceramic body of this invention exhibits a significantly higher fracture toughness than the monolithic and whisker-reinforced silicon nitride ceramics of the prior art. Moreover, if the fracture toughness of the silicon nitride ceramic of this invention is normalized with respect to density, the normalized fracture toughness and fracture strength are among the highest known for any ceramic material. Advantageously, the silicon nitride ceramic of this invention is self-reinforced. More advantageously, the room temperature fracture strength of the ceramic body of this invention is maintained at high temperatures, for example 1200°C or greater. The ceramic body is therefore suitable for high temperature applications.

The silicon nitride starting material used in preparing the ceramic body of this invention can be any silicon nitride powder, including the crystalline forms of $\alpha$-silicon nitride and $\beta$-silicon nitride, or noncrystal-line amorphous silicon nitride, or mixtures thereof. Preferably, the silicon nitride powder is predominantly in the alpha crystalline form or the amorphous form, or mixtures thereof. More preferably, the starting silicon nitride is predominantly in the alpha crystalline form. It is also advantageous if the preferred starting powder possesses a high $\alpha/\beta$ (alpha/beta) weight ratio. The starting powder desirably contains no greater than 20 weight percent $\beta$-silicon nitride. The $\beta$-silicon nitride content is preferably no greater than 10 weight percent $\beta$-silicon nitride, more preferably no greater than 6 weight percent.

Generally, the higher the purity of the starting silicon nitride powder, the better will be the properties of the finished ceramic body. Depending on the source, however, the silicon nitride powder may contain nonmetallic impurities. Some impurities may be tolerated in the powder, although it is preferred to minimize these as much as possible. Carbon, for example, which is likely to form silicon carbide during hot-pressing or sintering, is tolerable in small amounts. Elemental silicon is usually present in amounts ranging up to 0.5 weight percent. These amounts of elemental silicon are not deleterious and can be tolerated. Oxygen, present to some extent in the form of silica ($SiO_2$), is commonly found as a coating on the surface of the silicon nitride particles. The amount of silica varies according to the purity of the starting silicon nitride powder and its method of manufacture. The silica content may be reduced by leaching or increased by adding free silica in order to attain a desired total silica content, as described in further detail hereinafter.

The silicon nitride starting powder can be of any size or surface area provided that the ceramic body of this invention is obtained by hot-pressing. The sizes described in US-A-4,883,776 of column 4, lines 33-50 provide satisfactory results.

The silicon nitride is suitably present in an amount within in a range of from 65 to 99.75 weight percent based on total powder mixture weight. The range is desirably from 80 to 97 weight percent based upon total powder mixture weight. When a reinforcing material is present, the amount of silicon nitride is reduced so that a total of silicon nitride plus reinforcing material falls within these ranges.

In the process of this invention, the silicon nitride powder is mixed with other metallic oxide or non-oxide components, and the powder mixture is heated under pressure to obtain a densified ceramic composition. During heating, the metallic oxide and non-oxide components form a glassy grain boundary phase. This phase acts as a matrix into which the $\beta$-silicon nitride particles are embedded. Upon further heating or annealing, the glassy phase is transformed into a crystalline grain boundary phase, which then provides the ceramic composition of this invention. Any remarks hereinafter to a glassy phase refer to the aforementioned glassy phase formed on densification prior to annealing.

Raw silicon nitride powders cannot be densified to high densities in the absence of densification aids. Thus, the powder mixture must contain at least one densification aid. The densification aids form a liquid phase into which the $\alpha$-silicon nitride dissolves. The liquid phase forms at a temperature, or over a temperature range, that varies with the densification aid. The rate of mass transport of the $\alpha$-silicon nitride is usually quite rapid in the liquid phase. Thus, the silicon nitride density increases until a critical mass is reached and precipitation occurs.

For the purposes of this invention, the densification aid comprises a source of strontium and, optionally, a source of barium, calcium, lithium, sodium, or a mixture thereof. The sources of strontium and optional elements are suitably the corresponding oxides. Acceptable results are obtained with non-oxide derivatives, such as the corresponding acetates and carbonates. Oxides are the preferred source. The densification aid is beneficially strontium oxide alone or strontium oxide in combination with calcium oxide. The densification aid is preferably strontium oxide in combination with calcium oxide.

Any amount of a densification aid which promotes densification as described herein and produces the tough silicon nitride ceramic body of the invention is acceptable. The total amount of densification aid(s) is suitably within a range of from 0.04 weight percent to 10.0 weight percent, based on the total weight of the powder mixture. The range is beneficially from 0.5 weight percent to 9.8 weight percent, and desirably from 0.9 weight percent to 4.7 weight percent. If more than one densification aid is employed, the source of strontium is at least 0.04 weight percent, preferably, at least 0.8 weight percent, based on the total weight of the powder mixture.

The powder mixture must also contain a conversion aid. The conversion aid forms a glassy grain boundary phase through which mass transport is, in general, considerably slower than in the densification aid. Thus, $\alpha$-silicon nitride dissolves in the conversion aid on heating, but is not readily densified. Advantageously, however, the conversion aid promotes the rapid conversion of $\alpha$-silicon nitride to predominantly $\beta$-silicon nitride. This conversion is most desirable because $\beta$-silicon nitride, in the form of elongate, single crystal whiskers or grains, is responsible for the high fracture toughness and high fracture strength of the silicon nitride ceramic body of this invention. All references hereinafter to silicon nitride whiskers, single crystal whiskers and single crystal silicon nitride whiskers are intended to be synonymous and may be used interchangeably.

Any amount of conversion aid can be employed in the starting powder provided it is sufficient to cause conversion of the starting silicon nitride to predominantly $\beta$-silicon nitride and produce the tough silicon nitride ceramic body of the invention. The amount of conversion aid is beneficially in a range of from 0.2 weight percent to 29.5 weight percent, based on the total weight of the powder mixture. The range is desirably from 1.0 weight percent to 10.0 weight percent; preferably, from 1.7 weight percent to 8.5 weight percent.

The conversion aid is suitably a source or derivative of an element selected from yttrium, lanthanum, cerium, neodymium, samarium, europium, gadolinium, terbium, dysprosium, holmium, erbium, ytterbium, thorium, or a mixture thereof. Although the source is suitably an oxide, acceptable results are obtained with non-oxide derivatives, such as the corresponding carbonates or acetates. The conversion aid is desirably a source of yttrium, dysprosium, or ytterbium. The conversion aid is preferably a source of yttrium, most preferably, yttrium oxide.

Surprisingly, the weight ratio of conversion aid to densification aid has been found to affect the fracture toughness of the finished ceramic, provided a whisker growth enhancing compound is also present in the powder mixture. Any weight ratio of conversion aid to densification aid is acceptable if the fracture toughness shows an improvement over the fracture toughness value of 5 MPa $(m)^{1/2}$ for non-reinforced, monolithic silicon nitride. The weight ratio is suitably within a range of from 0.25 to 8. The range is beneficially from 0.5 to 5, desirably from 1 to 3, and preferably from 1 to 1.8. In the absence of a whisker growth enhancing compound, the conversion aid/densification aid weight ratio has no significant effect on the fracture toughness.

The powder mixture must further contain a whisker growth enhancing compound. This compound helps to provide a ceramic body of superior fracture toughness and high strength. Any amount of the compound

4

in the starting powder is acceptable provided it promotes formation of $\beta$-silicon nitride whiskers and produces the tough silicon nitride ceramic body of this invention. The amount is beneficially in a range of from 0.01 weight percent to 5 weight percent based on the total weight of the powder mixture. The range is desirably from 0.1 weight percent to 1.0 weight percent, preferably from 0.2 weight percent to 0.5 weight percent.

The whisker enhancing compound is an oxide or non-oxide derivative of lithium, sodium, calcium, scandium, titanium, aluminum, or a mixture thereof. The non-oxide derivative is suitably the corresponding acetate or carbonate. The whisker enhancing compound is desirably calcium oxide, sodium oxide or aluminum oxide, preferably calcium oxide.

The whisker growth enhancing compounds, densification aids and conversion aids are desirably in the form of powders that are pure and sufficiently small in size. Commercially available materials identified for use as whisker growth enhancing compounds, densification aids and conversion aids, particularly the oxide powders, generally contain less than 20 ppm each of assorted impurities. These levels of impurities are tolerable. Levels of impurities of 0.5 weight percent or more are not recommended as they may cause a change in the final ceramic composition and properties. Small powder particles disperse more readily than large powder particles. Oxide powders used herein desirably have an average particle size no greater than 5 $\mu$m in diameter.

Certain elements, such as sodium and lithium, may be used either as a densification aid or as a whisker growth enhancing compound in a given powder mixture. No element may, however, be used in an amount sufficient to function as both a densification aid and a whisker growth enhancing compound in a single powder mixture.

Silica is also required for the powder mixture of this invention. The silica provides an anionic silicate to counterbalance positively charged metallic ions present in the crystalline grain boundary phase. At least part of the silica is obtained from silica present on the surface of the silicon nitride. A source of additional silica is, however, usually needed. Suitable silica sources include quartz, fumed silica and sol-gel silica. Any quantity of additional silica that promotes formation of the oxynitride crystalline grain boundary phase is acceptable. The actual quantity varies depending upon the amounts of densification, conversion and whisker-formation aids that are present, and upon the amount of silica present on the surface of the silicon nitride. The total amount of silica, including silica present on the surface of the silicon nitride, is desirably in a range of from 2.3 to 6.0 weight percent, preferably in a range of from 3.0 to 5.0 weight percent, based on the total weight of the powder mixture.

Incorporating a Palmqvist toughness enhancing amount of at least one preformed reinforcing material into the powder mixture improves properties of the resultant silicon nitride body. Room temperature toughness and high temperature strength and stiffness are among the properties that are improved.

The reinforcing material must be chemically compatible with both the glassy phase and the crystalline phases and their components. The material can be selected from fibers or whiskers of $\beta$-silicon nitride or at least one of whiskers, fibers, particles or platelets of silicon carbide, titanium carbide, boron carbide, titanium diboride, or zirconium oxide. Materials that are normally chemically incompatible with the glassy phase and its components may be rendered compatible by coating them with one of boron carbide, silicon carbide, titanium carbide, zirconium oxide or titanium diboride. Normally incompatible materials include aluminum nitride, magnesium oxide and mullite. Titanium carbide provides a satisfactory coating for these incompatible materials.

The reinforcing material must be present in an amount sufficient to enhance the Palmqvist toughness of the resultant silicon nitride body without substantially interfering with, or eliminating, the formation of elongate silicon nitride grains. The reinforcing material, when present, occupies space in the silicon nitride phase in which elongate silicon nitride grains would otherwise grow in its absence. The amount of reinforcing material varies with the size of reinforcing material pieces, particles, fibers or whiskers as well as the volume occupied by the reinforcing material. Polycrystalline fibers provide acceptable results as a nominally continuous reinforcing material. Single crystal whiskers also provide acceptable results, albeit as a nominally discontinuous reinforcing material.

By way of illustration, a given volume percentage of large particles usually interferes less with the formation of elongate silicon nitride grains than an equal volume percentage of smaller particles. Accordingly, satisfactory results are obtained with any of the following combinations of reinforcement material diameter and volume percentages, based upon glassy phase volume: (a) less than 0.2 $\mu$m diameter, up to 10 volume percent; (b) from 0.2 $\mu$m to less than 0.5 $\mu$m diameter, up to 15 volume percent; (c) from 0.5 $\mu$m to less than 1.5 $\mu$m diameter, up to 25 volume percent; (d) from 1.5 $\mu$m to less than 2.5 $\mu$m diameter, up to 30 volume percent; (e) from 2.5 $\mu$m to less than 5.0 $\mu$m diameter. up to 35 volume percent; (f) from 5.0 $\mu$m to less than 15.0 $\mu$m diameter, up to 45 volume percent; (g) from 15.0 $\mu$m to 25.0 $\mu$m diameter, up

to 50 volume percent; and (h) greater than 25.0 $\mu$m diameter, up to 65 volume percent. Irrespective of the reinforcing material diameter, the amount of reinforcing material, where used, is beneficially greater than 5 volume percent. The reinforcing materials have different densities. As such, a universal weight percentage is not applicable. The weight percentages corresponding to the foregoing volume percentages are readily determined given the density of a particular reinforcing material.

In the process of this invention, the starting silicon nitride powder must be blended with a combination of a densification aid, a conversion aid, a whisker growth enhancing compound and, optionally, silica and/or a reinforcing material to obtain a powder mixture. The reinforcing material, when present, is beneficially added to the remaining components of the powder mixture after they are well mixed to minimize breakage or comminution of reinforcement material pieces. Suitable densification aids, conversion aids and whisker growth enhancing components are disclosed hereinabove. Ordinarily, the total quantity of densification aid, conversion aid and whisker growth enhancing compound is no greater than 35 weight percent of the total weight of the powder mixture. The 35 weight percent limit is also appropriate when a reinforcing material is used. The total quantity will depend, however, on probable end use applications for fired ceramics prepared from the powder mixture. For some applications, total quantities in excess of 35 weight percent will provide acceptable results. The total quantity is however, desirably in the range of from 5 weight percent to 35 weight percent for medium temperature and/or the highest fracture toughness applications. "Medium temperature" means temperatures in a range of from 900°C to 1200°C. Ceramic cutting tools are an example of a medium temperature and very high fracture toughness application. The total quantity is desirably in a range of from 0.25 weight percent to 5 weight percent for high temperature and/or moderately high fracture toughness applications. "High temperature" means temperatures of from 1200°C to 1400°C. Parts for ceramic engines are an example of a high temperature and moderately high fracture toughness application.

The powder mixture containing silicon nitride, densification aid(s), conversion aid(s), whisker growth enhancing compound(s), and, optionally, silica is suitably prepared by conventional methods. Ball-milling of the components in powder form is one acceptable method. The preferred method of preparing the powder mixture comprises using an attritor with zirconia balls to prepare a finely-divided suspension of powder mixture components in a carrier medium, drying an admixture of the suspension and the attritor balls, beneficially after removing, by filtration or otherwise, excess carrier medium, and thereafter separating the attritor balls to obtain the powder mixture.

Preparation of the finely-divided suspension requires no particular order of addition of the components. Powdered components other than silicon nitrile can, for example, be added either individually or simultaneously to a colloidal suspension of silicon nitride in a carrier medium or vice versa. Alternatively, all components of the powder mixture may be added simultaneously to the carrier medium prior to attritor milling. The latter method is preferred, particularly when an organic carrier medium such as toluene or an alcohol is employed. The preparation is typically conducted in a large vessel at room temperature (taken as 23°C) under air with vigorous stirring. If desired, an ultrasonic vibrator may be used in a supplementary manner to break down smaller agglomerates.

The carrier medium may be any inorganic or organic compound that is a liquid at room temperature and atmospheric pressure. Examples of suitable carrier media include water; alcohols, such as methanol, ethanol or isopropanol; ketones, such as acetone or methyl ethyl ketone; aliphatic hydrocarbons, such as pentane or hexane; and aromatic hydrocarbons, such as benzene or toluene. The carrier medium is desirably an organic liquid, preferably toluene or an alcohol such as methanol. The function of the carrier medium is to impart a viscosity suitable for mixing to the solid powders. Any quantity of carrier medium which achieves this purpose is sufficient and acceptable. The quantity of carrier medium desirably provides a solids content in a range of from 20 volume percent to 50 volume percent. The range is preferably from 35 volume percent to 45 volume percent. Below 20 volume percent, the viscosity of the solid suspension may be too low and deagglomeration mixing may be ineffective. Above 50 volume percent, the viscosity may be too high, and deagglomeration mixing may be difficult.

To aid in dispersing the powder mixture components, one or more surfactants or dispersants can be added to the suspension. The choice of surfactant(s) or dispersant(s) can vary widely as is well-known in the art.

If the carrier medium is toluene, a coupling agent, such as an aluminate coupling agent commercially available from Kenrich Petrochemicals under the trade designation KEN-REACT KA 322, may be used to aid in forming a suspension. When using an alcohol such as methanol, a dispersant such as a polyethyleneamine may be used to facilitate mixing and a flocculant such as oleic acid may be used to ease recovery of the powder mixture.

Any amount of surfactant or dispersant is acceptable providing dispersion of powder mixture components is improved. Typically, the amount of surfactant is in a range of from 0.01 to 1.0 weight percent of the powder mixture.

The finely-divided suspension is converted into greenware by conventional techniques such as slip-casting. Alternatively, the suspension can be dried into a powder and ground for use in hot-pressing processes. Drying is accomplished by conventional means, such as spray-drying or oven drying under a nitrogen purge. The admixture of the powder mixture and the attritor balls is preferably dried in an oven under a nitrogen purge after removal of excess carrier medium. Temperatures used in drying depend on the boiling point of the carrier medium employed. Drying is typically conducted at a temperature just below the boiling point of the carrier medium under atmospheric pressure. Preferably, the carrier medium is toluene or an alcohol and the drying temperature is about 50°C. After drying, the resulting powder is separated from the attritor balls and sieved through a screen to obtain a powder having a maximum agglomerate diameter of about 100 $\mu$m. The screen size is usually less than 60 mesh (Tyler equivalent) (250 $\mu$m); more preferably, less than 80 mesh (Tyler equivalent) (180 $\mu$m). The powder obtained on sieving is the powder mixture suitable for use in hot-pressing.

When reinforcing materials are included in the powder mixture, the foregoing procedure is modified depending upon the form of the reinforcing material. If the reinforcing material is in a form other than long or continuous fibers, it is added to the finely dispersed suspension of components and mixed or attrited for a suitable length of time. Attrition time largely depends upon a balancing of the extent of reinforcing material agglomeration with its friability or fragility. In other words, attrition time is long enough to break up most, if not all, of the agglomerates. It is also short enough to maintain sufficient reinforcing material integrity to provide a desired degree of reinforcement. The additional attrition time will also depend upon the reinforcing material. A typical time needed to accomplish dispersion of the reinforcing material will vary from 10 minutes to 45 minutes. The time is beneficially from 10 to 20 minutes. If the reinforcing material is in the form of fibers, also known as continuous fibers, no additional attrition time is required. The fibers are simply immersed in the finely dispersed suspension to deposit a coating of the suspension on their outer surface. The fibers are then removed from the suspension and dried before further processing. If desired, multiple coatings may be applied in this manner. The dried, coated fibers, whether in the form of single fibers or a fiber mat or fabric, are beneficially surrounded by the powder mixture in a hot-pressing die and then hot-pressed as described herein. Other conventional methods of processing fibers may also be used.

Any method for processing the powder mixture is acceptable, including hot-pressing (HP), hot isostatic pressure (HIP), and pressureless sintering. The typical method is by hot-pressing (HP) or hot isostatic pressure (HIP), which comprises heating the powder under pressure to obtain the densified ceramic body. Any conventional hot-pressing equipment is acceptable, such as a graphite die equipped with a heating means and a hydraulic press. Particularly suitable results are obtained when the die is fabricated from a material which is substantially non-reactive with components of the powder mixture at hot-pressing temperatures and has a mean linear coefficient of expansion greater than silicon nitride. The use of such a die material aids in preparing near net shapes without post-densification machining operations. The die material is desirably titanium carbide. R. Morrell, Handbook of Properties of Technical and Engineering Ceramics, pages 82-83 (1985), lists the mean linear coefficients respectively for silicon nitride and titanium carbide as 3.6 x $10^{-6}$ K$^{-1}$ and 8.2 x $10^{-6}$ K$^{-1}$. Hot-pressing is conducted under an inert atmosphere, such as nitrogen, to prevent the oxidation and decomposition of silicon nitride at high temperatures The direction of pressing is uniaxial and perpendicular to the plane of the die plates.

Any processing temperature and pressure will suffice if the novel silicon nitride ceramic of this invention, described hereinbelow, is obtained. Typically, however, the temperature must be carefully controlled because the elongate $\beta$-siliccn nitride whiskers are found to form in a narrow temperature range. The temperature maintained during pressurizing is desirably in a range of from 1700°C to 1870°C. The range is preferably from 1750°C to 1850°C, more preferably from 1800°C to 1840°C. Below 1700°C, the formation of elongate $\beta$-silicon nitride whiskers may be retarded. Above 1870°C, silicon nitride may decompose, and special pressure equipment may be required to conduct the densification. In the absence of a reinforcing material, the use of high pressure techniques such as hot isostatic pressing may allow use of temperatures up to 2000°C or even 2100°C. Accurate measurement of high temperatures, such as 1700°C to 2100°C, is technically difficult. Some variation in the preferred temperature range may be observed depending upon the method employed in measuring the temperature. The temperatures are desirably measured using a tungsten-rhenium thermocouple obtained from, and calibrated by, the Omega Company.

While the pressure during hot-pressing is important, it is not quite as critical a parameter as temperature. The pressure should be sufficient to cause densification of the green body. The pressure is desirably in a range of from 3000 psig to 6000 psig (20.7 MPa to 41.4 MPa). The range is preferably from 4000 psig to 5500 psig (27.6 MPa to 37.9 MPa) more preferably, from 4500 psig to 5200 psig (31.0 MPa to 35.8 MPa). Below 3000 psig (20.7 MPa), the powder will not be sufficiently densified. Above 6000 psig (41.4 MPa), the powder will densify in a shorter time and at a lower temperature. Although less rigorous processing conditions seem on the surface to be desirable, the formation of elongate β-silicon nitride crystals may be inhibited at lower temperatures, shorter pressing times or higher pressures.

The amount of time that the powder mixture is heated under pressure should be sufficient to bring the powder to essentially complete densification. Satisfactory results are obtained with the times disclosed in US-A-4,883,776 at column 9, lines 26-37.

As noted hereinabove, the aforementioned application of heat and pressure gives rise to a glassy grain boundary phase. In the process of this invention, the densified ceramic is heated further to convert the glassy grain boundary phase into a crystalline grain boundary phase. The heating which promotes this conversion is known to those skilled in the art as "annealing." Annealing, or crystallization, is typically carried out by placing the ceramic in a graphite receptacle that is thereafter heated in a silicon nitride powder bed under flowing nitrogen to a temperature and for a time sufficient to produce the crystalline grain boundary phase. The temperature is desirably in a range of from 1000°C to 1550°C, preferably from 1250°C to 1500°C, and more preferably from 1350°C to 1450°C. The annealing time ranges widely from 2 hours to 100 hours depending upon the sample size and the annealing temperature. The annealing procedure may be repeated one or more times, as desired.

The densification and annealing methods described herein allow for the formation of silicon nitride ceramic articles which can be used as cutting tools. A variety of shapes can be made by hot-pressing. One common shape is a flat plate. These plates may range in size from 2 inches (5.1 cm) in length by 1.5 inches (3.8 cm) in width by 0.45 inch (1.1 cm) in thickness to 16 inches (40.6 cm) in length by 16 inches (40.6 cm) in width by 1.0 inch (2.5 cm) in thickness. Smaller and larger plates can also be fabricated, as determined by the size of the hot-pressing plaques. Cutting tools can be fabricated by slicing and grinding these plates into a variety of cutting tool shapes.

Crystallization of the grain boundary phase does not significantly alter the room temperature physical and material properties, such as density, weight, dimensions, hardness, and toughness, of the ceramic. The density and weight changes are typically less than 0.5 percent on crystallization of the grain boundary phase. This implies that the volume or dimensional changes are also less than 0.5 percent. The hardness and toughness of the material having a crystalline grain boundary phase are also roughly the same as, or not more than 5 percent less than, similar silicon nitrides having a glassy grain boundary phase as described in US-A-4,883,776.

The silicon nitride ceramic body produced by the process of this invention is a dense material having no significant porosity. The body desirably has a density greater than 95 percent of the theoretical value. The density is preferably greater than 97 percent of the theoretical value, more preferably greater than 99 percent of the theoretical value. Moreover, as measured by X-ray diffraction, the silicon nitride is present predominantly in the beta-crystalline form in combination with a lesser amount of the alpha-form. The amount of alpha-form is desirably less than 30 weight percent based on total silicon nitride. preferably less than 10 weight percent. Quite unexpectedly, the β-silicon nitride is present predominantly as single crystal, "needle-like" whiskers or elongate grains, as determined by both scanning electron microscopy (SEM) and transmission electron microscopy (TEM). The size of the hexagonal β-silicon nitride grains is usually in a range of from 1 μm to 20 μm in length with a mean diameter in a range of from 0.2 μm to 1.5 μm; preferably from 3 μm to 10 μm in length with a mean diameter of from 0.3 μm to 1.0 μm.

Since the whiskers are oriented randomly, it is difficult to determine exactly the percentage of silicon nitride which exists as whiskers, as opposed to equiaxed particles. The measurement is made by viewing one plane of the silicon nitride ceramic in a scanning electron microscope (SEM) and measuring the percentage by volume occupied by whiskers having an aspect ratio between 2 and 16. It is observed that the whiskers are homogeneously distributed and randomly oriented throughout the ceramic body, and that the volume occupied by the whiskers is approximately the same in all planes. Typically, the percentage of silicon nitride whiskers having an aspect ratio of between 2 and 16 is at least 20 volume percent as measured in a plane. Preferably, the percentage of silicon nitride whiskers having an aspect ratio between 2 and 16 is at least 35 volume percent as measured in a plane. Unexpectedly, the whiskers are found to have a high average aspect ratio. Typically, the average aspect ratio of the silicon nitride whiskers is at least 2.5, preferably, at least 5.5. It is noted that because the aspect ratio is measured in a plane, the average aspect ratio is a lower bound. For example, a whisker which is perpendicular to the plane may have an apparent aspect ratio of less than 2; whereas the true aspect ratio may be very much greater than 2.

As a result of the additional annealing step in the process of this invention, the crystalline grain boundary phase has an oxynitride apatite structure, as determined by X-ray diffraction analysis. The crystallinity of the grain boundary phase is greater than 90 volume percent, based on the total volume of the grain boundary phase. The crystallinity is preferably greater than 95 volume percent, more preferably greater than 99 volume percent, based on the total volume of the grain boundary phase.

The crystalline grain boundary phase can be represented by the following general formula:

$$A_xB_{10-x}[Si(O,N)_4]_6(O,N)_y$$

wherein A is strontium, optionally, in combination with calcium, barium, sodium, scandium, lithium, titanium, aluminum, or a mixture thereof; B is yttrium, lanthanum, cerium, neodymium, samarium, europium, gadolinium, terbium, dysprosium, holmium, erbium, ytterbium, thorium, or a mixture thereof; x is a positive number greater than 0 and less than or equal to 4; and y is a positive number greater than 0 and less than or equal to 2. If "A" is strontium in combination with calcium, barium, sodium, scandium, lithium, titanium, or aluminum, the total equivalents present per molecular formula are "x". It is noted that the portions of the formula reading "$(O,N)_4$" and "$(O,N)_y$" refer to a combination of oxide and nitride, the combined total of which is equal to 4 or y equivalents, accordingly. Preferably, the crystalline phase is a strontium-calcium-yttrium silicon oxynitride, wherein A is strontium and calcium, B is yttrium, x is a positive number within a range of from 2 to 4, and y is a positive number within a range of from 0.5 to 1.5. More preferably, the crystalline phase is $(Ca,Sr)_3Y_7[Si(O,N)_4]_6(O,N)$.

Small quantities of other phases may be present in the ceramic in a total amount not exceeding 1 weight percent. The total amount preferably does not exceed 0.4 weight percent.

The mechanical properties of the self-reinforced silicon nitride ceramic body are readily measured by use of standard tests. In particular, fracture toughness ($K_{IC}$) is measured according to the Chevron notch and the Palmqvist methods described hereinafter. Fracture strength (modulus of rupture) is measured according to the Military Standard 1942b test. Hardness is measured according to the Vickers indentation test.

Fracture strength (modulus of rupture) measures the resistance of the material to fracture under a steady load. Fracture strength is defined as the maximum unit stress which the material will develop before fracture occurs. Test bars are prepared and tested as described in US-A-4,883,776 at column 10, lines 61-68. Typically, the fracture strength at room temperature is at least 650 MPa. Preferably, the fracture strength at room temperature ranges from 825 MPa to 1250 MPa, more preferably from 900 MPa to 1100 MPa. The fracture strength at 1000°C is typically at least 650 MPa. At 1375°C, the fracture strength is typically at least 350 MPa.

Toughness is defined and measured as described in US-A-4,883,776 at column 11, lines 14-27. Typically, the room temperature fracture toughness of the silicon nitride ceramic body of this invention, is greater than about 6 MPa $(m)^{1/2}$. The room temperature fracture toughness is desirably greater than 7 MPa $(m)^{1/2}$, preferably greater than 8 MPa $(m)^{1/2}$.

In the evaluation of cutting tool materials it is useful to measure the Palmqvist toughness and the Vickers hardness. Both measurements can be made simultaneously on one test sample.

The Vickers hardness test measures the resistance of the ceramic material to indentation. Samples are prepared and tested as described in US-A-4,883,776 at column 11, lines 44-64. The Vickers hardness number of the silicon nitride ceramic of this invention is at least 1325 kg/mm$^2$ at room temperature. The Vickers hardness number desirably ranges from 1400 kg/mm$^2$ to 1700 kg/mm$^2$ preferably from 1575 kg/mm$^2$ to 1675 kg/mm$^2$ at room temperature;

Palmqvist toughness testing is accomplished as described in US-A-4,883,776 at column 12, lines 3-13. The silicon nitride ceramic body of this invention beneficially exhibits a Palmqvist toughness at room temperature of at least 37 kg/mm. The Palmqvist toughness at room temperature is desirably in a range of from 37 kg/mm to 50 kg/mm, preferably from 40 kg/mm to 45 kg/mm.

The following examples serve to illustrate the novel self-reinforced silicon nitride composition of this invention and the method of preparing the same. The examples are not intended to limit the scope of this invention. All percentages are weight percent unless otherwise noted.

Example E-1 (a-i)

The silicon nitride powder, commercially available from Ube Industries, Ltd. under the trade designation SN-E10, contained 1.19 percent oxygen, less than 100 ppm Cl, less than 100 ppm Fe, less than 50 ppm Ca, and less than 50 ppm Al. It had a crystallinity of greater than 99.5 percent, a ratio of $\beta/(\alpha+\beta)$ of less

than 5, and a surface area of 11.2 m$^2$/g. Alfa Products supplied SrO and silica. Moly Corp supplied Y$_2$O$_3$, and Baker Incorporated supplied CaO.

The materials were mixed in an attritor (Union Process batch attritor, Model 01HD - 750 cc capacity with polytetrafluoroethylene coated tube and stirrer) containing zirconia balls with a stirring rate of 330 revolutions per minute (rpm). A mixture of 225 ml toluene and 25 drops of an aluminate coupling agent, commercially available from Kenrich Petrochemicals under the trade designation KENREACT KA 322, was used as a mixing medium. The silicon nitride powder (221.3 g), strontium oxide powder (88 g), yttrium oxide powder (16 g), calcium oxide powder (0.5 g), and silicon oxide powder (3.5 g) were added to the mixing medium and agitation was started. After about thirty minutes of mixing, an additional 100 ml of toluene was added and the agitation stirring rate was increased to 630 rpm for a period of two minutes to thin the mixture before removing it from the attritor together with the zirconia balls. Excess toluene was removed by vacuum filtration. The mixture was then dried under a flow of dry nitrogen gas. After drying, the mixture was separated from the zirconia balls using a 30 mesh (U.S. Series) (600 μm) stainless steel sieve and subsequently passed through 40 mesh (U.S. Series) (425 μm) and 60 mesh (U.S. Series) (250 μm) stainless steel sieves to provide a dried powder mixture composed of 88.5 percent by weight silicon nitride, 3.5 percent strontium oxide, 6.4 percent yttrium oxide, 0.2 percent calcium oxide, and 1.4 percent silicon oxide.

Eighty grams of the powder mixture was hot pressed using the procedure described in US-A-4,883,776 at column 13, lines 10-25 with one modification. The modification increased the time at 1825°C and a pressure of 5000 psig (34.5 MPa) from 45 minutes to 60 minutes.

Samples of the ceramic plate prepared hereinabove were placed in a graphite crucible, which was thereafter placed in a silicon nitride powder bath. The samples were annealed at a variety of temperatures ranging from 1250°C to 1550°C for a variety of annealing times ranging from 2 h to 100 h, as noted in Table I.

Table I[1][2]

| Sample | Anneal-ing Temp.[3] (°C) | Anneal-ing Time[3] (h) | Vickers Hardness (Kg/mm$^2$) | Palmqvist Toughness (Kg/mm) | Phases[4] | Fracture Strength (MPa) |
|---|---|---|---|---|---|---|
| As hot-pressed | NA | NA | 1681±23 | 44.5±1.8 | β, α, G | 285±19 |
| E-1a | 1350 | 2 | 1610±35 | 43.5±3.1 | β, α, A | - |
| E-1b | 1350 | 5 | 1651±24 | 40.9±1.2 | β, α, A | - |
| E-1c | 1350 | 10 | 1595±33 | 41.0±1.8 | β, α, A | - |
| E-1d | 1350 | 50 | 1634±0 | 42.2±2.2 | β, α, A | - |

EP 0 572 464 B1

Table I [①][④]

| Sample | Annealing Temp.[②] (°C) | Annealing Time[③] (h) | Vickers Hardness (Kg/mm2) | Palmqvist Toughness (Kg/mm) | Phases[⑤] | Fracture Strength (MPa) |
|---|---|---|---|---|---|---|
| E-1e | 1350 | 100 | 1608±40 | 37.3±2.1 | β,α,A | - |
| E-1f | 1250 | 50 | 1556±0 | 48.0±2.8 | β,α,A | - |
| E-1g | 1450 | 1 | 1591±40 | 44.3±4.6 | β,α,A | - |
| E-1h | 1450 | 50 | 1626±18 | 42.3±3.5 | β,α,A | 360±18 |
| E-1i | 1550 | 50 | 1643±19 | 42.7±1.7 | β,α,A | 374±5 |

① Samples were hot-pressed at 1825°C for 1 h before annealing.
② NA means not applicable, because the sample was not annealed.
③ Phases: $\beta$-Si$_3$N$_4$, $\alpha$-Si$_3$N$_4$, "A" for oxynitride apatite, and "G" for a glassy phase. E-1g shows trace of an unidentified fourth phase.
⑤ Vickers hardness and Palmqvist toughness were measured at room temperature; Fracture strength was measured at 1375°C.

After annealing, in addition to $\alpha$-Si$_3$N$_4$ and $\beta$-Si$_3$N$_4$, a second crystalline phase was present having an oxynitride apatite structure characterized as (Ca,Sr)$_3$Y$_7$[Si(O,N)$_4$]$_6$(O,N).

The densities of the silicon nitride ceramic bodies, prepared hereinabove, with and without annealing were measured by the water immersion method, as described in Modern Ceramic Engineering by D. W. Richerson, Marcel Dekker, 1982. The densities were 3.29 g/cc or very close thereto. In other words, the bodies had a density approximating 100 percent of theoretical density, and were essentially nonporous. Silicon nitride was present predominantly as $\beta$-Si$_3$N$_4$, as determined by X-ray diffraction, with less than 30 percent as residual $\alpha$-Si$_3$N$_4$. The bulk chemical composition of the annealed ceramic was determined by stereology analysis from SEM photomicrographs and was found to contain about 90 volume percent silicon nitride and about 10 volume percent crystalline grain boundary phase. The microstructure of the silicon nitride ceramic, prepared hereinabove, was determined by scanning electron microscopy (SEM), as viewed

12

in a plane. About 35 volume percent of the silicon nitride appeared in the form of elongate whiskers having an aspect ratio ranging from 2 to 16. The average aspect ratio was 5.6.

The Palmqvist toughness of the above-identified silicon nitride ceramic bodies, measured at room temperature, is set forth in Table I, as is the Vickers hardness measured at room temperature under a 14-kg load, and the fracture strength measured at 1375°C by the 4-point bend technique. The Palmqvist toughness, Vickers hardness, and fracture strength of an "as hot-pressed" sample, that is, without annealing is also set forth in Table I.

It is seen that the samples E-1(a-e) which were annealed at 1350°C for a time ranging from 2 to 100 hours show a slightly lower Vickers hardness than the hot-pressed sample with no annealing. Advantageously, however, these samples show, within experimental error, no significant decrease in Palmqvist toughness up to 50 hours of annealing time, when compared with the hot-pressed sample with no annealing. It is further seen that samples E-1(h-i) which were annealed for 50 hours at a temperature of 1450°C or 1550°C show roughly the same hardness as the hot-pressed sample with no annealing. (Sample E-1f which was annealed for 50 h at 1250°C exhibits a lower hardness than the hot-pressed sample having no annealing for reasons which are not understood.) Advantageously, however, Samples E-1-(f-i) exhibited a Palmqvist toughness similar to the hot-pressed control sample.

The results generally indicate that the silicon nitride ceramics of this invention having a crystalline oxynitride apatite grain boundary phase possess a Palmqvist toughness at room temperature comparable to that of the unannealed, hot-pressed sample having a glassy grain boundary phase. Most advantageous, when the fracture strength measurements (at 1375°C) of two annealed samples (E-1h and E-1i) are compared with the fracture strength of the "as hot-pressed" sample, it is seen that the fracture strength of the annealed samples is significantly higher than that of the "as hot-pressed" sample.

Example E-2 (a-f)

A powder composition was prepared and hot pressed into plates as in Example 1, with the exception that the hot pressing was conducted at 1875°C for 1 hour. The plates were annealed at a variety of temperatures ranging from 1250°C to 1450°C for a variety of annealing times ranging from 1 h to 50 h with the results set forth in Table II.

Table II[①]

| Sample | Annealing Temp.[②] (°C) | Annealing Time[②] (h) | Vickers Hardness (Kg/mm2) | Palmqvist Toughness (Kg/mm) | Phases[③] |
|---|---|---|---|---|---|
| As hot-pressed | NA | NA | 1541±21 | 43.9±1.5 | β, G |
| E-1a | 1350 | 2 | 1483±51 | 44.2±2.5 | β, A |
| E-1b | 1350 | 5 | 1651±24 | 40.9±1.2 | β, A |
| E-1c | 1350 | 10 | 1504±33 | 46.5±1.5 | β, A |
| E-1d | 1450 | 1 | 1389±59 | 45.5±7.1 | β, A |
| E-1e | 1450 | 50 | 1520±66 | 42.9±1.6 | β, A |
| E-1f | 1250 | 50 | 1434±33 | 47.3±5.6 | β, A |

① Samples were hot-pressed at 1875°C for 1 h before annealing.
② NA means not applicable, because the sample was not annealed.
③ Phases include $\beta$-$Si_3N_4$, "A" for oxynitride apatite, and "G" for a glassy phase. No $\alpha$-$Si_3N_4$ was observed.

The data presented in Table II show that, at a hot pressing temperature of 1875°C, essentially all of the silicon nitride was converted to the beta crystalline form with no alpha phase remaining. The data also show that the oxynitride apatite crystalline phase formed on annealing despite the absence of $\alpha$-$Si_3N_4$. Thus, a comparison of Examples E-1(a-i) and E-2(a-f) leads to a conclusion that the crystallization of the oxynitride apatite phase does not depend upon the presence or absence of an $\alpha$-$Si_3N_4$ phase. Moreover, the Palmqvist toughness values of the E-1 samples containing alpha phase were similar to those of the corresponding E-2 samples without alpha phase that were annealed at identical temperatures and times. These data suggest that the Palmqvist toughness is not dependent upon the presence or absence of $\alpha$-$Si_3N_4$ at concentrations of $\alpha$-$Si_3N_4$ less than 30 weight percent.

14

Example E-3 (a-g)

Seven powder compositions were prepared with the compositions shown in Table III and hot pressed following the procedure described in Example 1.

Table III[①]

| Ex. E-3 | Si3N4 Wt.% | Mole Ratio of Additives (Normalized to Ca,Sr oxides) | | | Vickers Hardness (kg/mm²) | | Palmqvist Toughness (kg/mm) | |
|---|---|---|---|---|---|---|---|---|
| | | (Ca,Sr) Oxides | :M2O3 (M) | :SiO2[②] | Not Annealed | Annealed | Not Annealed | Annealed |
| a | 88.51 | 1 | 0.75(Y) | 1.50 | 1681±23 | 1634±0 | 44.5±1.8 | 42.2±2.2 |
| b | 91.03 | 1 | 0.75(Y) | 1.50 | 1590±29 | 1576±21 | 42.0±0.9 | 41.5±1.1 |
| c | 94.88 | 1 | 0.75(Y) | 1.50 | 1556±0 | 1533±25 | 41.9±1.9 | 41.3±0.9 |
| d | 89.30 | 1 | 0.70(Y) | 1.65 | 1512±41 | 1415±19 | 48.6±2.1 | 46.0±1.2 |
| e | 89.60 | 1 | 1.0(Yb) | 1.56 | 1603±21 | 1576±28 | 40.8±1.2 | 40.2±0.9 |
| f | 90.00 | 1 | 1.0(Dy) | 1.56 | 1548±17 | 1526±31 | 41.3±2.1 | 39.8±0.4 |
| g[③] | 87.60 | 1 | 0.95(Dy) | 1.52 | 1750±45 | 1634±0 | 39.3±1.6 | 40.5±1.4 |

① Samples (a) and (b) were hot-pressed at 1825°C for 1 h. Samples (c)-(g) were hot-pressed at 1875°C for 1 h. Annealed samples were heated at 1350°C for 50 hours after hot-pressing.
② Includes surface silica from Si3N4 powder.
③ Sample includes 2.67 weight percent aluminum nitride.

The Vickers hardness and Palmqvist toughness of the samples described in Table III were measured at room temperature. The samples were annealed at 1350°C for 50 hours. It was observed, from X-ray diffraction measurements, that the annealed samples E-3 (a-g), which cover a wide range of composition, possessed a crystalline grain boundary phase corresponding to an oxynitride apatite structure. The hardness and fracture toughness of the annealed samples were measured at room temperature with the results shown in Table III. It was observed that the Palmqvist toughness values of the annealed samples were close to the Palmqvist values of the corresponding samples which were not annealed, whereas the hardness values of the annealed samples were slightly, but not significantly, lower than the hardness values of the corresponding samples which were not annealed.

It can be generally concluded that the physical properties of the annealed samples, measured at room temperature, compare favorably with the physical properties of the corresponding non-annealed samples.

Example E-4 (a-f)

Six powder mixtures having the compositions shown in Table IV were prepared according to the procedure of Example 1, with the exception that silicon carbide was added to each composition as a pre-formed reinforcing material.

Table IV[1]

| Ex. E-4 | Si3N4 Wt.% | Y2O3 Wt.% | SrO Wt.% | CaO Wt.% | SiO2[2] Wt.% | SiC Reinforcing Material | | Phases[4] | |
|---|---|---|---|---|---|---|---|---|---|
| | | | | | | Wt.% | Form[3] | Not Annealed | Annealed |
| a | 80.013 | 5.506 | 3.197 | 0.172 | 1.052 | 10.061 | particles | β,α,SiC | β,α,SiC,A |
| b | 79.787 | 5.756 | 3.185 | 0.174 | 1.077 | 10.024 | particles | β,α,SiC | β,α,SiC,A |
| c | 71.411 | 5.167 | 2.877 | 0.154 | 0.710 | 20.246 | particles | β,α,SiC | β,α,SiC,A |
| d | 80.013 | 5.506 | 3.197 | 0.172 | 1.052 | 10.061 | whiskers | β,α,SiC | β,α,SiC,A |
| e | 80.013 | 5.506 | 3.197 | 0.172 | 1.052 | 10.061 | platelets | β,SiC | β,SiC,A |
| f | 71.411 | 5.167 | 2.877 | 0.154 | 0.710 | 20.245 | 10% whiskers, 10% platelets | β,SiC | β,SiC,A |

[1] Samples were hot-pressed at 1825°C for 1 h, then annealed at 1350°C for 50 hours.

[2] Includes surface silica from Si3N4 powder.

[3] Silicon carbide source: particles (a) and (c), Ferro (BSC-21); particles (b) Ibeden UF-B; whiskers, American Matrix; and platelets, C-Axis.

[4] β-Si3N4; α-Si3N4; SiC of Examples E-4a,b,c,d has cubic structure; SiC of Examples E-4e,f has 4H structure; A is oxynitride apatite.

The powder compositions of Table IV were hot pressed and annealed as specified in Example 1. The resulting silicon nitride ceramics were analyzed by X-ray diffraction which showed that in each case a crystalline grain boundary phase was obtained having an oxynitride apatite structure. It was observed that the silicon carbide reinforcing material does not inhibit the formation of the crystalline oxynitride apatite grain boundary phase.

**Claims**

1. A process for preparing a silicon nitride ceramic body containing a phase of predominantly $\beta$-silicon nitride whiskers having an average aspect ratio of at least 2.5 and further containing a crystalline grain boundary phase having an oxynitride apatite structure, the process comprising: subjecting a powder mixture comprising

   (a) silicon nitride in an amount sufficient to provide a ceramic body;

   (b) a densification aid, comprising a source of strontium and, optionally, a source of an element selected from lithium, sodium, calcium, barium, or a mixture thereof, said source(s) being present in an amount sufficient to promote densification of the powder;

   (c) a conversion aid comprising a source of an element selected from yttrium, lanthanum, cerium, neodymium, samarium, europium, gadolinium, terbium, dysprosium, holmium, erbium, ytterbium, thorium, or a mixture thereof, said source being present in an amount sufficient to promote the conversion of the starting silicon nitride to predominantly $\beta$-silicon nitride;

   (d) at least one whisker growth enhancing compound in an amount sufficient to promote the formation of $\beta$-silicon nitride whiskers, said compound being an oxide or non-oxide derivative of an element selected from lithium, sodium, calcium, scandium, titanium or aluminum, or a mixture thereof, provided, however, that the element differs from that of the optional component of densification aid (b); and

   (e) silica in an amount sufficient to provide the oxynitride apatite crystalline grain boundary phase;

   to conditions of temperature and pressure sufficient to provide for densification and *in situ* formation of $\beta$-silicon nitride whiskers having an average aspect ratio of at least 2.5 and of a glassy grain boundary phase, and thereafter subjecting the densified composition to annealing for a time sufficient to convert at least 90 volume % of said boundary phase to a crystalline grain boundary phase having an oxynitride apatite structure, as determined by X-ray crystallography.

2. A process as claimed in Claim 1, wherein the powder mixture comprises silica additional to that present in the surface of the silicon nitride.

3. A process as claimed in Claim 1 or Claim 2, wherein composition of the powder mixture and the densification conditions are such that the $\beta$-silicon nitride whiskers have an aspect ratio within a range of from 2 to 16 and are present in an amount of at least 20 volume percent, as measured by viewing one plane of the silicon nitride ceramic body by scanning electron microscopy.

4. A process as claimed in Claim 3, wherein said composition and conditions are such that said amount of $\beta$-silicon nitride whiskers is at least 35 volume percent.

5. A process as claimed in any one of the preceding claims, wherein the composition of the powder mixture and the densification conditions are such that said average aspect ratio is at least 5.5.

6. A process as claimed in any one of the preceding claims, wherein the starting silicon nitride contains no greater than 10 weight percent $\beta$-silicon nitride.

7. A process as claimed in any one of the preceding claims, wherein the amount of densification aid is within a range of from 0.04 weight percent to 10.0 weight percent, the amount of conversion aid is within a range of from 0.2 weight percent to 29.5 weight percent and the amount of whisker growth enhancing compound is from 0.01 to 5.0 weight percent, all weight percentages being based on total weight of the powder mixture.

8. A process as claimed in any one of the preceding claims, wherein the densification aid and the conversion aid are present in amounts sufficient to provide a weight ratio of conversion aid to densification aid of from 1:4 to 8:1.

9. A process as claimed in Claim 8, wherein the weight ratio is from 1:1 to 1.8:1.

10. A process as claimed in any one of the preceding claims, wherein the densification aid is strontium oxide, the conversion aid is yttrium oxide and the whisker growth enhancing compound is calcium oxide.

**11.** A process as claimed in any one of the preceding claims, wherein the powder mixture comprises silica additional to that present on the surface of the silicon nitride in a total amount, including the silica present on the surface of the silicon nitride, ranging from 2.3 to 6 weight percent, based upon total weight of the powder mixture.

**12.** A process as claimed in any one of the preceding claims, wherein the powder mixture further comprises a Palmqvist toughness enhancing amount of at least one preformed reinforcing material selected from

(a) whiskers or fibers of $\beta$-silicon nitride;

(b) whiskers, fibers, particles or platelets of silicon carbide, titanium carbide, boron carbide, titanium diboride, or zirconium oxide; or

(c) whiskers, fibers, particles or platelets of magnesium oxide, aluminum nitride or mullite coated with silicon carbide, titanium carbide, boron carbide, titanium diboride, or zirconium oxide.

**13.** A process as claimed in any one of the preceding claims, wherein the amount of silicon nitride plus the amount of any said preformed reinforcing material is in a range of from 65 to 99.75 weight percent based on the total weight of the powder mixture.

**14.** A process as claimed in any one of the preceding claims, wherein the densification temperature is in a range from 1700°C to 1870°C and the densification pressure is in a range from 20.7 MPa (3000 psig) to 41.4 MPa (6000 psig).

**15.** A process as claimed in any one of the preceding claims, wherein the annealing step comprises heating the densified composition at a temperature within a range of from 1000°C to 1550°C for a time ranging from 2 h to 100 h.

**16.** A process as claimed in any one of the preceding claims, wherein the composition of the powder mixture and the densification and annealing conditions are such that the density of the silicon nitride ceramic is at least 97 percent of the theoretical value.

**17.** A silicon nitride ceramic body obtainable by a process as defined in Claim 1 having a Palmqvist fracture toughness greater than 37 Kg/mm at 23°C and comprising:

(a) a crystalline phase of $\beta$-silicon nitride of which at least 20 volume percent, as measured by viewing one plane of the silicon nitride ceramic body by scanning electron photomicrographs, is in the form of whiskers having an average aspect ratio of at least 2.5; and

(b) a crystalline grain boundary phase having an oxynitride apatite structure, as determined by X-ray crystallography, in an amount not greater than 35 weight percent of the total weight, represented by the general formula

$$A_x B_{10-x}\text{-}[Si(O,N)_4]_6(O,N)_y$$

wherein

A is strontium, optionally, in combination with calcium, barium, lithium, sodium, scandium, titanium, aluminum, or a mixture thereof;

B is yttrium, lanthanum, cerium neodymium, samarium, europium, gadolinium, terbium, dysprosium, holmium, erbium, ytterbium, thorium, or a mixture thereof;

x is a positive number greater than 0 but less than or equal to 4; and

y is a positive number ranging from greater than 0 to less than or equal to 2.

**18.** A body as claimed in Claim 17, further comprising a Palmqvist toughness enhancing amount of at least one preformed reinforcing material selected from

(a) $\beta$-silicon nitride in whisker or fiber form;

(b) whiskers, fibers, particles or platelets of silicon carbide, titanium carbide, boron carbide, titanium diboride, or zirconium oxide; or

(c) whiskers, fibers, particles or platelets of magnesium oxide, aluminum nitride or mullite coated with silicon carbide, titanium carbide, boron carbide, titanium diboride or zirconium oxide.

19. A body as claimed in Claim 17 or Claim 18, wherein the crystallinity of the grain boundary phase is greater than 90 volume percent, the Vickers hardness, as measured at room temperature, is in a range of from 1400 $kg/mm^2$ to 1700 $kg/mm^2$, the Palmqvist toughness, as measured at room temperature, is in a range of from 37 kg/mm to 50 kg/mm and the fracture strength, as measured at 1375 °C, is at least 350 MPa.

20. A body as claimed in any one of Claims 17 to 19, wherein the crystalline structure in $(Ca,Sr)_3 Y_7 [Si-(O,N)_4]_6 (O,N)$.

21. A cutting tool fabricated from a ceramic body as defined in any one of Claims 17 to 20.

**Patentansprüche**

1. Verfahren zur Herstellung eines Keramikkörpers aus Siliziumnitrid, welcher eine Phase aus hauptsächlich $\beta$-Siliziumnitrid-Whisker mit einem durchschnittlichen Seitenverhältnis von mindestens 2,5 enthält und weiter eine kristalline Korngrenzen-Phase mit einer Oxynitrid-Apatit-Struktur enthält, umfassend:

Aussetzen eines Pulvergemisches, welches umfaßt

a) Siliziumnitrid in einer ausreichenden Menge, um einen Keramikkörper zu liefern,

b) eine Verdichtungshilfe, welche eine Strontium-Quelle und gegebenenfalls eine Quelle eines Elementes, das unter Lithium, Natrium, Calcium, Barium oder einem Gemisch davon ausgewählt ist umfaßt, wobei die Quelle(n) in einer ausreichenden Menge vorhanden ist bzw. sind, um eine Verdichtung des Pulvers zu fördern,

c) ein Umwandlungsmittel, das eine Quelle eines Elementes umfaßt, das unter Yttrium, Lanthan, Cer, Neodym, Samarium, Europium, Gadolinium, Terbium, Dysprosium, Holmium, Erbium, Ytterbium, Thorium oder einem Gemisch davon ausgewählt ist, wobei die Quelle in einer ausreichenden Menge vorhanden ist, um die Umwandlung des eingesetzten Siliziumnitrids zu hauptsächlich $\beta$-Siliziumnitrid zu fördern,

d) mindestens eine das Whisker-Wachstum fördernde Verbindung in einer ausreichenden Menge, um die Bildung von $\beta$-Siliziumnitrid-Whiskern zu fördern, wobei die Verbindung ein Oxid oder Nicht-Oxid-Derivat eines Elementes ist, das unter Lithium, Natrium, Calcium, Scandium, Titan oder Aluminium oder einem Gemisch davon ausgewählt ist, jedoch mit der Maßgabe, daß das Element von der gegebenenfalls eingesetzten Verdichtungs-Komponente (b) verschieden ist, und

e) Siliziumdioxid in einer ausreichenden Menge, um die kristalline Korngrenzen-Phase mit Oxynitrid-Apatit-Struktur zu liefern

ausreichenden Temperatur- und Druck-Bedingungen, um eine Verdichtung und in situ-Bildung von $\beta$-Siliziumnitrid-Whiskern mit einem durchschnittlichen Seitenverhältnis von mindestens 2,5 und von glasartigen Korngrenzen-Phasen zu liefern und anschließend Aussetzen der verdichteten Zusammensetzung für eine ausreichende Zeitspanne einer Wärmebehandlung, um mindestens 90 Vol.-% der Grenzphase zu einer kristallinen Korngrenzen-Phase mit einer Oxynitrid-Apatit-Stuktur, bestimmt durch Röntgenstrahlen-Kristallographie, umzuwandeln.

2. Verfahren nach Anspruch 1, wobei das Pulvergemisch zusätzlich zu dem auf der Oberfläche des Siliziumnitrid vorhandenen Siliziumdioxids Siliziumdioxid umfaßt.

3. Verfahren nach Anspruch 1 oder Anspruch 2, wobei die Zusammensetzung des Pulvergemisches und die Verdichtungs-Bedingungen dergestalt sind, daß die $\beta$-Siliziumnitrid-Whisker ein Seitenverhältns innerhalb eines Bereiches von 2 bis 16 aufweisen und in einer Menge von mindestens 20 Vol.-%, gemessen durch Prüfen einer Fläche des Siliziumnitrid-Keramikkörpers mittels Rasterelektronenmikroskopie, vorhanden sind.

4. Verfahren nach Anspruch 3, wobei die Zusammensetzung und die Bedingungen dergestalt sind, daß die Menge der $\beta$-Siliziumnitrid-Whisker mindestens 35 Vol.-% beträgt.

5. Verfahren nach einem der vorhergehenden Ansprüche, wobei die Zusammensetzung des Pulvergemisches und die Verdichtungs-Bedingungen dergestalt sind, daß das durchschnittliche Seitenverhältnis mindestens 5,5 beträgt.

**6.** Verfahren nach einem der vorhergehenden Ansprüche, wobei das eingesetzte Siliziumnitrid nicht mehr als 10 Gew.-% $\beta$-Siliziumnitrid enthält.

**7.** Verfahren nach einem der vorhergehenden Ansprüche, wobei die Menge der Verdichtungshilfe innerhalb eines Bereiches von 0,04 Gew.-% bis 10,0 Gew.-% liegt, die Menge der Umwandlungshilfe innerhalb eines Bereiches von 0,2 Gew.-% bis 29,5 Gew.-% liegt und die Menge der das Whisker-Wachstum fördernden Verbindung 0,01 bis 5,0 Gew.-% beträgt, wobei alle Gewichts-Prozentangaben auf das Gesamtgewicht des Pulvergemisches bezogen sind.

**8.** Verfahren nach einem der vorhergehenden Ansprüche, wobei die Verdichtungshilfe und die Umwandlungshilfe in ausreichenden Mengen vorhanden sind, um ein Gewichtsverhältnis der Umwandlungshilfe zur Verdichtungshilfe von 1:4 bis 8:1 zu liefern.

**9.** Verfahren nach Anspruch 8, wobei das Gewichtsverhältnis 1:1 bis 1,8:1 beträgt.

**10.** Verfahren nach einem der vorhergehenden Ansprüche, wobei die Verdichtungshilfe Strontiumoxid ist, die Umwandlungshilfe Yttriumoxid ist und die das Whisker-Wachstum fördernde Verbindung Calciumoxid ist.

**11.** Verfahren nach einem der vorhergehenden Ansprüche, wobei das Pulvergemisch zusätzlich zu dem auf der Oberfläche des Siliziumnitrid vorhandenen Siliziumdioxids Siliziumdioxid in einer Gesamtmenge, einschließlich des auf der Oberfläche des Siliziumnitrids vorhandenen Siliziumdioxids, in einem Bereich von 2,3 bis 6 Gew.-%, bezogen auf das Gesamtgewicht des Pulvergemisches, umfaßt.

**12.** Verfahren nach einem der vorhergehenden Ansprüche, wobei das Pulvergemisch weiter eine die Palmquist-Härte erhöhende Menge von mindestens einem vorgeformten Verstärkungsmaterial enthält, das ausgewählt ist unter
(a) Whiskern oder Fasern aus $\beta$-Siliziumnitrid,
(b) Whiskern, Fasern, Teilchen oder Plättchen aus Siliziumcarbid, Titancarbid, Borcarbid, Titandiborid oder Zirkonoxid, oder
(c) Whiskern, Fasern, Teilchen oder Plättchen aus Magnesiumoxid, Aluminiumnitrid oder Mullit, welche mit Siliziumcarbid, Titancarbid, Borcarbid, Titandiborid oder Zirkonoxid beschichtet sind.

**13.** Verfahren nach einem der vorhergehenden Ansprüche, wobei die Menge an Siliziumnitrid und die Menge des vorgeformten Verstärkungsmaterials in einem Bereich von 65 bis 99,75 Gew.-%, bezogen auf das Gesamtgewicht des Pulvergemisches, liegt.

**14.** Verfahren nach einem der vorhergehenden Ansprüche, wobei die Verdichtungstemperatur in einem Bereich von 1700°C bis 1870°C liegt und der Verdichtungsdruck in einem Bereich von 20,7 Mpa (3000 Psig) bis 41,4 MPa (6000 Psig) liegt.

**15.** Verfahren nach einem der vorhergehenden Ansprüche, wobei der Wärmebehandlungsschritt Erhitzen der verdichteten Zusammensetzung bei einer Temperatur innerhalb eines Bereiches von 1000°C bis 1550°C für eine Zeitspanne im Bereich von 2 Stunden bis 100 Stunden umfaßt.

**16.** Verfahren nach einem der vorhergehenden Ansprüche, wobei die Zusammensetzung des Pulvergemisches und die Verdichtungs- und Wärmebehandlungs-Bedingungen dergestalt sind, daß die Dichte der Siliziumnitrid-Keramik mindestens 97 % des theoretischen Wertes beträgt.

**17.** Kermamikkörper aus Siliziumnitrid, welcher durch ein Verfahren nach Anspruch 1 erhältlich ist und der eine Palmquist Bruch-Härte von größer als 37 Kg/mm bei 23°C besitzt und der umfaßt:
(a) eine kristalline $\beta$-Siliziumnitrid-Phase, von der mindestens 20 Vol.-%, gemessen durch Prüfen einer Fläche des Siliziumnitrid-Kermamikkörpers mittels Raster-Elektronenmikroskopie-Photoaufnahmen, in Form von Whiskern mit einem durchschnittlichen Seitenverhältnis von mindestens 2,5 vorliegen, und
(b) eine kristalline Korngrenzen-Phase mit einer Oxynitrid-Apatit-Struktur, bestimmt durch Röntgenstrahlen-Kristallographie, in einer Menge von mehr als 35 Gew.-% des Gesamtgewichtes, welche durch die allgemeine Formel dargestellt ist

EP 0 572 464 B1

$$A_x B_{10-x}\text{-}[Si(O,N)_4]_6 (O,N)_y$$

worin

A Strontium, gegebenenfalls in Kombination mit Calcium, Barium, Lithium, Natrium, Scandium, Titan, Aluminium oder ein Gemisch davon ist,

B Yttrium, Lanthan, Cer, Neodym, Samarium, Europium, Gadolinium, Terbium, Dysprosium, Holmium, Erbium, Ytterbium, Thorium oder ein Gemisch davon ist,

x eine positive Zahl größer 0, jedoch kleiner oder gleich 4 ist, und

y eine positive Zahl im Bereich größer als 0 bis weniger oder gleich 2 ist.

18. Körper nach Anspruch 17, welcher weiter eine die Palmquist-Härte erhöhende Menge von mindestens einem vorgeformten Verstärkungsmaterial umfaßt, welches ausgewählt ist unter

(a) $\beta$-Siliziumnitrid in Whisker- oder Faserform,

(b) Whiskern, Fasern, Teilchen oder Plättchen aus Siliziumcarbid, Titancarbid, Borcarbid, Titandiborid oder Zirkonoxid, oder

(c) Whiskern, Fasern, Teilchen oder Plättchen aus Magnesiumoxid, Aluminiumnitrid oder Mullit, die mit Siliziumcarbid, Titancarbid, Borcarbid, Titandiborid oder Zirkonoxid beschichtet sind.

19. Körper nach Anspruch 17 oder Anspruch 18, worin die Kristallinität der Korngrenzen-Phase größer als 90 Vol.-% ist, die Vickers-Härte, gemessen bei Raumtemperatur, in einem Bereich von 1400 Kg/mm$^2$ bis 1700 Kg/mm$^2$ liegt, die Palmquist-Härte, gemessen bei Raumtemperatur, in einem Bereich von 37 Kg/mm bis 50 Kg/mm liegt und die Bruchfestigkeit, gemessen bei 1375°C mindestens 350 MPa beträgt.

20. Körper nach einem der Ansprüche 17 bis 19, worin die kristalline Struktur $(Ca,Sr)_3 Y_7 [Si(O,N)_4]_6 (O,N)$ ist.

21. Schneidwerkzeug, das aus einem Keramikkörper nach einem der Ansprüche 17 bis 20 hergestellt ist.

**Revendications**

1. Procédé pour préparer un corps céramique de nitrure de silicium contenant en majeure partie une phase de trichites de nitrure de $\beta$-silicium ayant un rapport d'aspect moyen d'au moins 2,5 et contenant de plus une phase intergranulaire cristalline ayant une structure apatite d'oxynitrure, le procédé consistant à soumettre un mélange de poudres comprenant:

(a) du nitrure de silicium en quantité suffisante pour fournir un corps céramique;

(b) un auxiliaire de densification comprenant une source de strontium et, éventuellement, une source d'un élément choisi parmi le lithium, le sodium, le calcium, le baryum ou un de leurs mélanges, la ou lesdites source(s) étant présente(s) en quantité suffisante pour favoriser la densification de la poudre;

(c) un auxiliaire de conversion comprenant une source d'un élément choisi parmi l'yttrium, le lanthane, le cérium, le néodyme, le samarium, l'europium, le gadolinium, le terbium, le dysprosium, l'holmium, l'erbium, l'ytterbium, le thorium ou un de leurs mélanges, ladite source étant présente en quantité suffisante pour favoriser la conversion du nitrure de silicium de départ en nitrure de $\beta$-silicium de façon prédominante.

(d) au moins un composé favorisant la croissance de trichites en quantité suffisante pour favoriser la formation de trichites de nitrure de $\beta$-silicium, ledit composé étant un oxyde ou un dérivé non-oxyde d'un élément choisi parmi le lithium, le sodium, le calcium, le scandium, le titane ou l'aluminium, ou un de leurs mélanges, à condition toutefois, que l'élément diffère du composant éventuel de l'auxiliaire de densification (b); et

(e) de la silice en quantité suffisante pour fournir une phase intergranulaire cristalline apatite d'oxynitrure;

dans des conditions de température et de pression suffisantes pour fournir une densification et une formation in situ de trichites de nitrure de $\beta$-silicium ayant un rapport d'aspect moyen d'au moins 2,5 et une phase intergranulaire vitreuse, et ensuite à soumettre la composition densifiée à un recuit pendant une durée suffisante afin de convertir au moins 90% en volume de ladite phase intergranulaire en une phase intergranulaire cristalline ayant une structure apatite d'oxynitrure, comme déterminé par cristallo-

22

EP 0 572 464 B1

graphie aux rayons X.

2. Procédé selon la revendication 1, dans lequel le mélange de poudres comprend de la silice en plus de celle présente sur la surface du nitrure de silicium.

3. Procédé selon l'une des revendications 1 ou 2, dans lequel la composition du mélange de poudres et les conditions de densification sont telles que les trichites de nitrure de $\beta$-silicium possèdent un rapport d'aspect compris entre 2 et 16 et sont présentes à raison d'au moins 20 pour-cent en volume, mesuré en visualisant un plan du corps céramique de nitrure de silicium par microscope électronique à balayage.

4. Procédé selon la revendication 3, dans lequel lesdites composition et conditions sont telles que ladite quantité de trichites de nitrure de $\beta$-silicium est d'au moins 35 pour-cent en volume.

5. Procédé selon l'une quelconque des revendications précédentes, dans lequel la composition du mélange de poudres et les conditions de densification sont telles que ledit rapport d'aspect moyen est d'au moins 5,5.

6. Procédé selon l'une quelconque des revendications précédentes, dans lequel le nitrure de silicium de départ ne contient pas plus de 10 pour-cent en poids de nitrure de $\beta$-silicium.

7. Procédé selon l'une quelconque des revendications précédentes, dans lequel la quantité d'auxiliaire de densification est comprise entre 0,04 pour-cent en poids et 10,0 pour-cent en poids, la quantité d'auxiliaire de conversion est comprise entre 0,2 pour-cent en poids et 29,5 pour-cent en poids et la quantité de composé favorisant la croissance de trichites est de 0,01 à 5,0 pour-cent en poids, tous les pourcentages en poids étant basés sur le poids total du mélange de poudres.

8. Procédé selon l'une quelconque des revendications précédentes, dans lequel l'auxiliaire de densification et l'auxiliaire de conversion sont présents en quantités suffisantes pour fournir un rapport pondéral de l'auxiliaire de conversion à l'auxiliaire de densification de 1:4 à 8:1.

9. Procédé selon la revendication 8, dans lequel le rapport pondéral est de 1:1 à 1,8:1.

10. Procédé selon l'une quelconque des revendications précédentes, dans lequel l'auxiliaire de densification est l'oxyde de strontium, l'auxiliaire de conversion est l'oxyde d'yttrium et le composé favorisant la croissance de trichites est l'oxyde de calcium.

11. Procédé selon l'une quelconque des revendications précédentes, dans lequel le mélange de poudres comprend de la silice en plus de celle présente sur la surface du nitrure de silicium en une quantité totale, y compris la silice présente sur la surface du nitrure de silicium, comprise entre 2,3 et 6 pour-cent en poids, par rapport au poids total du mélange de poudres.

12. Procédé selon l'une quelconque des revendications précédentes, dans lequel le mélange de poudres comprend de plus une quantité améliorant la ténacité Palmqvist d'au moins une matière de renforcement préformée choisie parmi:
   (a) les trichites ou fibres de nitrure de $\beta$-silicium;
   (b) les trichites, les fibres, les particules ou les plaquettes de carbure de silicium, de carbure de titane, de carbure de bore, de diborure de titane ou d'oxyde de zirconium; ou
   (c) les trichites, les fibres, les particules ou les plaquettes d'oxyde de magnésium, de nitrure d'aluminium ou de mullite revêtues de carbure de silicium, de carbure de titane, de carbure de bore, de diborure de titane ou d'oxyde de zirconium.

13. Procédé selon l'une quelconque des revendications précédentes, dans lequel la quantité de nitrure de silicium plus la quantité de n'importe laquelle desdites matières de renforcement préformées est comprise entre 65 et 99,75 pour-cent en poids par rapport au poids total du mélange de poudres.

14. Procédé selon l'une quelconque des revendications précédentes, dans lequel la température de densification est comprise entre 1 700°C et 1 870°C et la pression de densification est comprise entre

23

20,7 MPa (3 000 psig) et 41,4 MPa (6 000 psig).

15. Procédé selon l'une quelconque des revendications précédentes, dans lequel l'étape de recuit consiste à chauffer la composition densifiée à une température comprise entre 1 000 °C et 1 550 °C pendant une durée comprise entre 2 h et 100 h.

16. Procédé selon l'une quelconque des revendications précédentes, dans lequel la composition du mélange de poudres et les conditions de densification et de recuit sont telles que la densité de la céramique de nitrure de silicium est d'au moins 97 pour-cent de la valeur théorique.

17. Corps céramique de nitrure de silicium que l'on peut obtenir à l'aide d'un procédé défini selon la revendication 1 ayant une ténacité à la rupture Palmqvist supérieure à 37 kg/mm à 23 °C et comprenant:

(a) une phase cristalline de nitrure de $\beta$-silicium dont au moins 20 pour-cent en volume, mesurés en visualisant un plan du corps céramique de nitrure de silicium au microscope électronique à balayage, sont sous forme de trichites ayant un rapport d'aspect moyen d'au moins 2,5; et

(b) une phase intergranulaire cristalline ayant une structure apatite d'oxynitrure, comme déterminé par cristallographie aux rayons X, en une quantité ne dépassant pas 35 pour-cent en poids du poids total, représentée par la formule générale

$$A_xB_{10-x}\text{-}[Si(O,N)_4]_6(O,N)_y$$

dans laquelle

A est le strontium, éventuellement en combinaison avec le calcium, le baryum, le lithium, le sodium, le scandium, le titane, l'aluminium ou un de leurs mélanges;

B est l'yttrium, le lanthane, le cérium, le néodyme, le samarium, l'europium, le gadolinium, le terbium, le dysprosium, l'holmium, l'erbium, l'ytterbium, le thorium ou un de leurs mélanges;

x est un nombre positif supérieur à 0 mais inférieur ou égal à 4; et

y est un nombre positif supérieur à 0 mais inférieur ou égal à 2.

18. Corps selon la revendication 17, comprenant de plus une quantité améliorant la ténacité Palmqvist d'au moins une matière de renforcement préformée choisie parmi:

(a) le nitrure de $\beta$-silicium sous forme de trichites ou de fibres;

(b) les trichites, les fibres, les particules ou les plaquettes de carbure de silicium, de carbure de titane, de carbure de bore, de diborure de titane ou d'oxyde de zirconium; ou

(c) les trichites, les fibres, les particules ou les plaquettes d'oxyde de magnésium, de nitrure d'aluminium ou de mullite revêtues de carbure de silicium, de carbure de titane, de carbure de bore, de diborure de titane ou d'oxyde de zirconium.

19. Corps selon la revendication 17 ou 18, dans lequel la cristallinité de la phase intergranulaire est supérieure à 90 pour-cent en volume, la dureté Vickers, mesurée à la température ambiante, est comprise entre 1 400 kg/mm$^2$ et 1 700 kg/mm$^2$, la ténacité Palmqvist, mesurée à la température ambiante, est comprise entre 37 kg/mm et 50 kg/mm et la résistance à la rupture, mesurée à 1 375 °C, est d'au moins 350 MPa.

20. Corps selon l'une quelconque des revendications 17 à 19, dans lequel la structure cristalline est $(Ca,Sr)_3Y_7[Si(O,N)_4]_6(O,N)$.

21. Outil de coupe fabriqué à partir d'un corps céramique défini selon l'une quelconque des revendications 17 à 20.